# EUROPEAN PATENT APPLICATION

(11) **EP 0 593 779 A1**
(43) Date of publication of application: **27.04.1994**
(21) Application number: 93908081.8
(22) Date of filing: 13.04.1993
(51) Int. Cl.: C04B 7/00, C04B 7/44, B01J 2/04

(54) **APPARATUS FOR PRODUCING SPHERICAL HYDRAULIC MATERIAL**

(30) Priority: 14.04.1992 JP 94061/92
(71) Applicant: MITSUBISHI MATERIALS CORPORATION, Chiyoda-ku, Tokyo 100 (JP)
(72) Inventor: HATTORI, Kenichi, Mitaka-shi, Tokyo 181 (JP); ASAKURA, Etsuro, Cement Lab, Mitsubishi, Ohmiya-shi, Saitama 330 (JP)
(74) Representative: Altenburg, Udo, Dipl.-Phys.
(86) International application number: JP9300467
(87) International publication number: WO9321121

(57) **Abstract**

An apparatus for producing a spherical hydraulic material comprises a melting furnace (1) for melting raw materials of a hydraulic material and/or the hydraulic material, fine granulation means for finely granulating the molten material (2) such as a nozzle (4) or a high speed rotary member, a chamber (5) for accepting the finely granulated material, cooling it and converting it into spherical fine powder, and means (6, 7) for recovering the spherical fine powder. When the material molten in the melting furnace enters the chamber and is finely granulated, the molten material is immediately formed into a complete sphere because its surface tension is relatively great, and is cooled and recovered as the spherical fine powder. The resulting spherical hydraulic material is highly fluidized by a small amount of water, and turns to a molded article having high strength and high durability, and moreover, having an excellent dimensional accuracy. Spherical hydraulic material which is approximately in the form of a complete sphere, is extremely smooth on the particle surface and exhibits high fluidity can be obtained by using this apparatus. This hydraulic material can be produced without limiting the blend ratio of the starting components, and various ashes of an incinerator can be utilized as the hydraulic material. Moreover, maintenance becomes easy.

## Description

### TECHNICAL FIELD

The present invention relates to an apparatus for producing globular hydraulic substances such as globular or spherical cement. In particular, it relates to an apparatus for producing globular hydraulic substances which exhibit high fluidity suitable for producing high strength molded articles.

### BACKGROUND OF ART

The hydraulic cement, which represents hydraulic substances, is produced, after calcining and rapidly cooling its raw materials in a rotary kiln to obtain cement clinker, by pulverizing the clinker together with gypsum. In order not to melt the cement clinker in the rotary kiln, the calcining temperature in the rotary kiln is limited to be narrow, and simultaneously the blending ratio of chemical components of the cement raw material is limited in a range to enlarge the difference between a sintering temperature and a melting temperature of the cement raw material.

On the other hand, among the collected dust from coal fired boilers, globular substances are mixed and used in the cement as fly ash. However, other various incineration ashes are used as they are or after melting for land reclamation in low land zones as waste, which are not effectively utilized as a hydraulic material.

The conventional apparatus for producing hydraulic cement has various problems such that:
(1) in order not to melt cement raw materials in a rotary kiln, the temperature condition of the rotary kiln and the blending ratio of chemical components of the cement raw materials are limited;
(2) since the rotary kiln rotates, lining bricks are easily subjected to abrasion and falling, and the maintenance is not easy;
(3) a large amount of electric powder is required in a finish mill to pulverize clinkers which are hard sintered substances;
(4) the abrasion is vigorous between a liner and a pulverizing means such as a ball, roller and the like to be used in the finish mill, and the maintenance is not easy; and
(5) the transport line from producing of clinker to making up of cement is long, there are many places where dusts generate, and the apparatus is easy to be subjected to abrasion.
   In addition, there is such a problem that:
(6) the cement which is produced by using the above-mentioned conventional apparatus is a pulverized substance, so that it is composed of angular and amorphous fine particles.

The reason why the above-mentioned (6) is the problem will be explained herein.

The cement produced as described above has an angular and irregular shape, so that one in which it is mixed and kneaded with water does not have high fluidity, and an amount of water to obtain necessary and minimum fluidity for molding in a state of cement paste is 30 % in a water/cement ratio. The amount of water can be further reduced when a high performance water reducing agent is used, however, 25 % in the cement ratio is a limit even in such a case.

It is a well-known fact that the concrete strength after curing becomes high when the water/cement ratio is made small. It has been hitherto tried that the water/cement ratio is made as small as possible to place in a mold form as concentrated ready-mixed concrete so as to obtain a molded article having a high strength.

However, in the case of the cement obtained by the method depending on conventional pulverization, due to the angular and irregular shape thereof, it is impossible to decrease the water/cement ratio, the compressive strength of concrete products has a limit of about 1,200 kgf/cm², and it is difficult to obtain a molded article having a high strength. Thus it is difficult to use such a concrete product instead of structural ceramics and metal.

On the other hand, when the conventional angular cement is made into a globular form, such globular fine particles provide a function similar to that of globular fine particles such as silica fume and the like utilized for high strength concrete products. A kneaded mixture of the globular fine particles and water has higher fluidity, and the globular fine particles in the mixed and kneaded state form a dense charged structure, so that a concrete product obtained by curing the kneaded mixture has a high strength, the contraction of it due to drying is reduced, and the durability of it becomes high.

In addition, a concrete product, which is obtained by suitably selecting a particle size of the globular fine particles and placing them in a mold form using a dispersing agent, not only expresses a high strength corresponding to that of an oxide ceramics molded article by sintering, but also it is more excellent in the dimensional accuracy than the oxide ceramics molded article because no sintering step is required after the placing.

Therefore, it is desired to produce cement made to have a globular shape.

Unexamined Published Japanese Patent Application No.192439/1990 discloses a method in which a hydraulic substance such as pulverized and angular cement is made to have a globular shape.

Namely, according to the method of the Japanese Patent Application, cement fine particles collide with a blade rotating at a high speed and give them a shock, whereby the particles are made to globular and their surfaces are made smoothly. However, in this method, it is required to produce cement clinker by calcining a cement raw material, and the above-mentioned problems (1) to (5) with respect to the apparatus are not solved at all. In addition, the degree of globularness and the smoothness on the particle surface are also insufficient.

It is an object of the present invention to provide an apparatus for producing a globular hydraulic substance which approximates to a true sphere and has an extremely smooth particle surface.

It is another object of the present invention to provide an apparatus for producing a globular hydraulic substance which exhibits high fluidity suitable for producing molded articles which have a high strength and high durability and are excellent in dimensional accuracy.

It is another object of the present invention to provide an apparatus for producing a globular hydraulic substance which can be produced without limiting the blending ratio of raw material components of the hydraulic substance, and which can utilize various incineration ashes as hydraulic materials.

It is still another object of the present invention to provide an apparatus for producing a globular hydraulic substance which is easy in maintenance because neither rotary kiln nor finish mill is used.

### DISCLOSURE OF INVENTION

In order to achieve the above-mentioned objects, the apparatus for producing globular hydraulic substances of the present invention is provided with; a dissolving furnace for melting raw materials for a hydraulic substance and/or the hydraulic substance, a means for atomizing the melted substance, a chamber for cooling and forming globular fine powder particles by receiving the atomizing substance , and a means for recovering the globular fine powder particles.

As the dissolving furnace of the present invention can be used an electric furnace, a high frequency induction furnace, a gas furnace, an arc discharge furnace, a reverberatory furnace, a pulverized coal fired boiler, a laser melting furnace, a plasma melting furnace and the like.

As the material to be added to the dissolving furnace, the raw materials for the hydraulic substance and/or the hydraulic substance are used. The raw material for the hydraulic substance is exemplified by one kind or two or more kinds of usually used cement raw materials selected from the group consisting of limestone, clay, silica rock, slag, bauxite, iron oxide and the like. And it is also available that the dissolving furnace is optionally further added with lime ash, various incineration ashes, sludge ash, caustic lime, volcanic ash, red sludge, concrete waste materials, fluorite and the like besides the above-mentioned cement raw materials. The hydraulic substance to be added to the dissolving furnace is exemplified by one kind or two or more kinds of substances selected from the group consisting of cement, cement clinker, slag, lime and the like. The raw material for the hydraulic substance and the water curable substance are added to the dissolving furnace respectively alone or after mixing them, which are melted. These substances are converted into a liquid substance having viscosity in a melted state. When the cement raw material is added to the dissolving furnace, it is necessary to heat the dissolving furnace at least at about 1,500°C in order to melt the cement raw material.

The substance melted in the dissolving furnace is supplied to the means for atomizing such as a nozzle or a high speed rotating body for atomizing as it is or after being temporarily stored in a holding furnace or a container. The substance having been atomized is received in the chamber, and is cooled therein and becomes globular fine powder particles.

When the means for atomizing is a nozzle, it is also available that connection is made between the dissolving furnace and the nozzle or between the holding furnace and the nozzle, a plug installed at the furnace bottom or the furnace wall is opened, and the melted substance is supplied to the nozzle. The nozzle is provided at a top portion, a bottom portion or a side portion of the chamber, and one or plural nozzle holes of the nozzle are provided directing to the inside of the chamber. When the nozzle is installed at the top portion of the chamber, it is also available that the dissolving furnace or the holding furnace is installed above the nozzle. As a method for spraying the melted substance from the nozzle, there are a method in which an exhaust nozzle for high pressure gas from a gas bomb or a compressor is provided near the nozzle hole so as to spray with this high pressure gas, and a method in which the melted substance is sucked through the nozzle hole by making the inside of the chamber reduced pressure to spray. In this case, it is preferable that the degree of vacuum in the chamber is maintained higher than 10⁻² Torr.

When the means for atomizing is the high speed rotating body, there are a type in which the rotating body is, for example, a conical disk, a flat disk or a plate article having its central portion or peripheral portion slightly dented and rotates in the horizontal direction serving a vertical axis as the center, a type which is a plate article or a cylindrical article having convex and concave grooves at the outer peripheral edge such as a gear and rotates in the vertical direction serving a horizontal axis as the center, and the like. In addition, there are a type in which the melted substance collides with the surface of the rotating body, and a type in which it passes through the inside of the rotating body. In the case of the rotating body of any type, the melted substance is splashed and atomized by the centrifugal force generated by the rotation of the rotating body. It is preferable that the high speed rotating body is cooled with cooling water or the like.

It is preferable that the chamber is provided with a means for cooling by blowing a low temperature gas, for example, a nitrogen gas against the atomized substance.

The recovering means for globular fine powder particles is provided with an apparatus for separating the fine powder particles from the gas such as a cyclone, a bag filter or the like, and a storing tank for the separated fine powder particles.

The particle diameter, the particle size distribution or the degree of crystallinity of the globular hydraulic substance of the present invention can be controlled by changing the surface tension, the viscosity and the degree of atomizing or the condition of cooling of the atomized substance. The particle diameter of the globular hydraulic substance of the present invention can be made not more than 100µm which is equivalent to or not more than that of the cement fine particles by the conventional production method.

For this purpose, besides the chemical composition of the raw material for the hydraulic substance, the kind and the adding amount of flux and the temperature of the melted substance, the operation condition of the apparatus are changed. Namely, when the nozzle is used as the means for atomizing, the shape of the nozzle is changed, or the kind of the gas or the gas pressure for spraying the melted substance is changed, thereby the concentration, the charge amount, the residence time, the temperature and the like of the atomized substance by spraying are adjusted. Especially when the inside of the chamber is made into decompression, the degree of vacuum of the chamber, the temperature or the shape of the nozzle is changed to control the particle diameter, the particle size distribution or the degree of crystallinity of the hydraulic substance.

In addition, when the high speed rotating body is used as the means for atomizing, the number of rotation of the rotating body, the radius of the rotating body, the charge amount or the falling position onto the rotating body of the melted substance is optionally selected, thereby it is necessary to make suitable splashing and cooling conditions.

The substance melted in the dissolving furnace is atomized by the nozzle or the high speed rotating body, and enters the inside of the chamber. When the atomization is conducted in the chamber, the melted substance is immediately converted into true spheres owing to its relatively large surface tension, and converted into globular powder particles by being cooled. The globular fine powder particles are separated from the gas by means of the recovering means, and the globular hydraulic substance is obtained.

When the particle size distribution of the obtained globular hydraulic substance is optionally selected and it is mixed and kneaded with water, then the globular hydraulic substance having a small diameter enters between the globular hydraulic substance having a large diameter, it becomes the most concentrated charged structure. When the hydraulic substance is cement, then a cement paste having high fluidity is obtained with a small water/cement ratio.

### BRIEF DESCRIPTION OF DRAWINGS

Fig. 1 is a schematic illustration of a production apparatus of Example 1 of the present invention;
Fig. 2 shows enlarged cross-sectional views of nozzles in Fig. 1;
Fig. 3 is a schematic illustration of a production apparatus of Example 2 of the present invention;
Fig. 4 is a schematic illustration of a production apparatus of Example 3 of the present invention;
Fig. 5 is a schematic illustration of a production apparatus of Example 4 of the present invention;
Fig. 6 is a schematic illustration of a production apparatus of Example 5 of the present invention; and
Fig. 7 is a schematic illustration of a production apparatus of Example 6 of the present invention.

### BEST MODE FOR CARRYING OUT THE INVENTION

Examples of the present invention will be explained in detail on the basis of the drawings.

### 〈Example 1〉

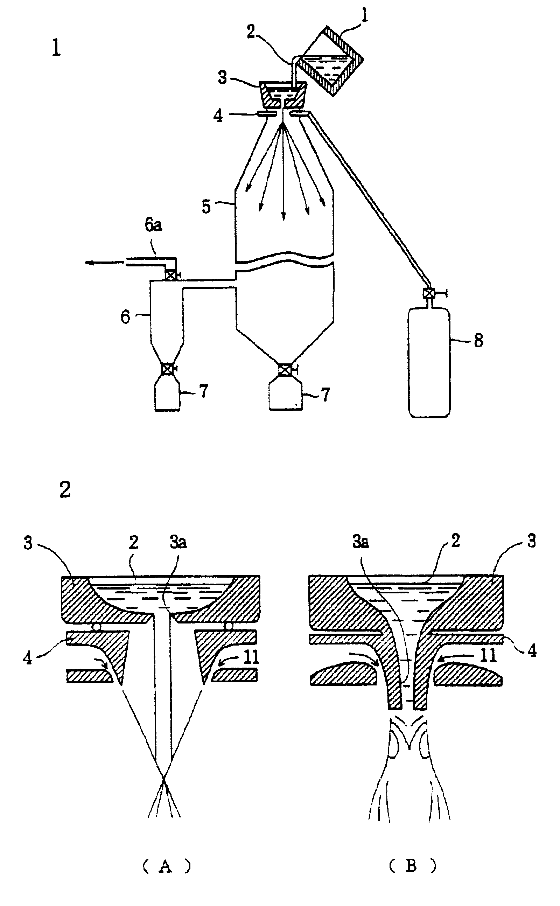

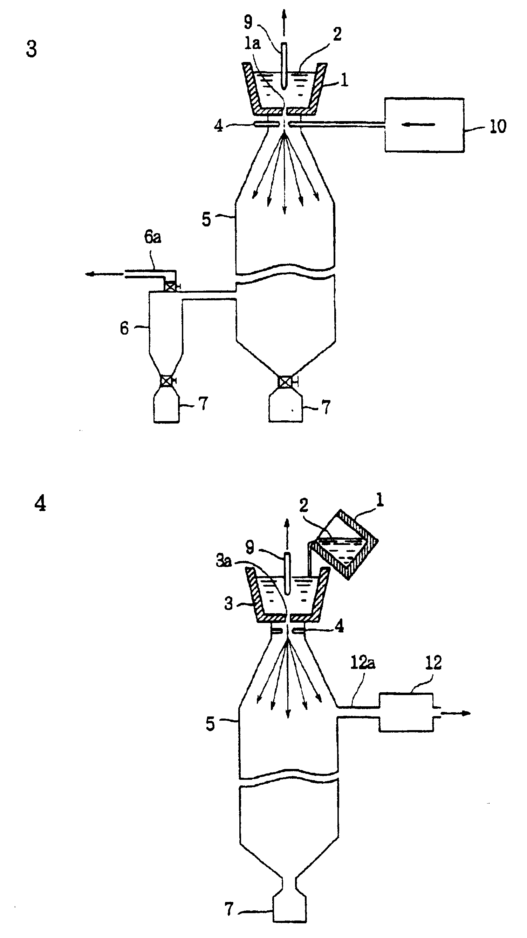

As shown in Fig. 1, Fig. 2(A) and Fig. 2(B), a holding furnace 3 is installed at the top portion of a chamber 5, and a drain hole 3a is formed at the furnace bottom center of the holding furnace 3. A nozzle 4, which uses this drain hole 3a as a nozzle hole, is provided at the chamber top portion. An exhaust nozzle 11 for high pressure gas from a gas bomb 8 is provided near the nozzle hole of the nozzle 4.

Using the nozzle 4 shown in Fig. 2(A), the high pressure gas is blown against a melted substance 2 freely falling from the drain hole 3a of the holding furnace 3 so as to spray the melted substance 2 into the inside of the chamber 5. Using the nozzle 4 shown in Fig. 2(B), the high pressure gas is blown so as to guide the surrounding of the melted substance 2 flowing and falling from the drain hole 3a of the holding furnace 3, thereby the melted substance 2 sprays into the inside of the chamber 5.

A cyclone 6 is provided at the side portion of the chamber 5 by being communicated with the chamber 5. Storing tanks 7 for globular fine powder particles are provided at the chamber bottom portion and the cyclone bottom portion respectively, and an exhaust gas tube 6a is connected to the cyclone top portion.

In this apparatus, after cement raw materials are melted in a dissolving furnace 1, the melted substance 2 is transferred to the holding furnace 3. As shown in Fig. 2(A) and Fig. 2(B), the substance sprayed by the nozzle 4 and atomized immediately becomes globular owing to its surface tension, and is cooled in the chamber 5 naturally or by force by means of a cooling means not shown in the figure. During the process of the cooling, the hydraulic cement having been converted into globular fine powder particles is recovered in the storing tank 7 just below the chamber for those having larger particle diameter or in the storing tank 7 just below the cyclone for those having smaller particle diameter after by being separated from gas in the cyclone 6.

### 〈Example 2〉

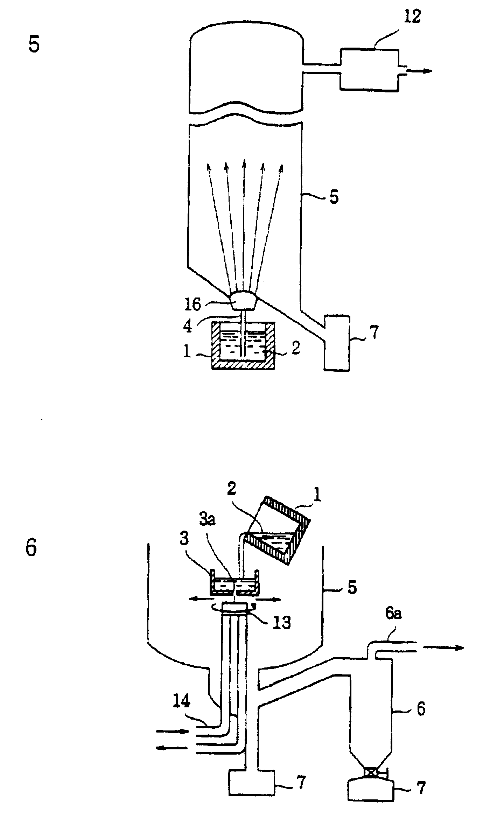

As shown in Fig. 3, in this Example, a dissolving furnace 1 is directly installed at the top portion of a chamber 5. A drain hole 1a used for draining and atomizing the melted substance 2 is formed at the furnace bottom center of the dissolving furnace 1. A nozzle 4 is formed using the drain hole 1a as the center. The drain hole 1a is blocked by a plug 9 until cement raw materials are melted in the dissolving furnace 1. High pressure air is supplied to the nozzle 4 from an air compressor 10 instead of the gas bomb 8 in Example 1. Other constitution is the same as Example 1.

In this apparatus, by drawing out the plug 9, the melted substance 2 in the dissolving furnace 1 flows and falls from the drain hole 1a of the dissolving furnace 1 to the nozzle 4, which is sprayed herein into the inside of the chamber 5 by the high pressure gas supplied from the air compressor 10. Globular fine powder particles are thereafter recovered in the same manner as Example 1.

### 〈Example 3〉

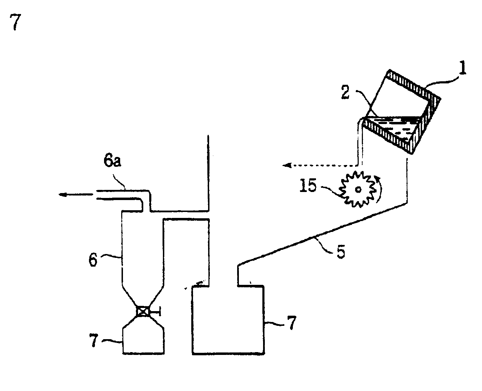

As shown in Fig. 4, in this Example, instead of the gas bomb or the air compressor for supplying high pressure gas, a vacuum pump 12 is provided at the side portion of a chamber 5, and the cyclone is omitted. The chamber 5 has an air-tight structure, and a holding furnace 3 is installed at its top portion. A drain hole 3a used for draining and atomizing the melted substance 2 is formed at the furnace bottom center of the holding furnace 3, and a nozzle 4 is formed using the drain hole 3a as the center. A plug 9 is provided at the drain hole 3a in the same manner as Example 2, and a storing tank 7 for globular fine powder particles is provided just below the chamber. Although it is not shown in the figure, it is preferable that a filter is provided at an air suction tube 12a at the chamber side of the vacuum pump 12. An exhaust gas tube of the vacuum pump 12 communicates with atmospheric air.

In this apparatus, cement raw materials are melted in the dissolving furnace 1, and the melted substance 2 is transferred to the holding furnace 3. When the plug 9 of the holding furnace 3 is drawn out in a state where the inside of the chamber 5 is reduced pressure by the vacuum pump 12, the melted substance 2 is sucked into the chamber through the drain hole 3a, and is accelerated by the nozzle 4 and vigorously sprayed into the chamber 5. Thereafter, in the same manner as Example 1, hydraulic cement converted into globular fine powder particles freely falls and is recovered in the storing tank 7.

### 〈Example 4〉

As shown in Fig. 5, in this Example, a pipe-shaped nozzle 4 is provided at the approximate center of the bottom portion of a chamber 5 through a shutter 16, and a dissolving furnace 1 is installed below the nozzle 4. The lower end of the nozzle 4 is provided with extending up to the vicinity of the inner bottom portion of the dissolving furnace 1. A vacuum pump 12 is provided at the side portion in the vicinity of the top portion of the chamber 5, and a storing tank 7 for globular fine powder particles is provided at the corner of the bottom portion of the chamber 5.

In this apparatus, cement raw materials are melted in the dissolving furnace 1, and when the shutter 16 is opened in a state where the inside of the chamber 5 is reduced pressure by the vacuum pump 12, the melted substance 2 is sucked into the chamber, and is accelerated by the nozzle 4 and vigorously sprayed into the chamber 5 in the upper direction. Thereafter, in the same manner as Example 3, hydraulic cement converted into globular fine powder particles freely falls and is recovered in the storing tank 7. As compared with Example 3, the spraying direction is directed upward, so that the degree of separation of fine powder particles from gas is excellent.

### 〈Example 5〉

As shown in Fig. 6, in this Example, a high speed rotating body 13, which rotates using a vertical axis as the center, is provided at the central portion of a chamber 5. The rotation driving mechanism thereof is not shown in the figure. The rotating body 13 is a disk, above which a holding furnace 3 is provided. A drain hole 3a is formed at the furnace bottom center of the holding furnace 3, and the holding furnace 3 is provided so as to the drain hole 3a to be located at the center of the rotating body 13. A water-cooling mechanism (not shown) for cooling the rotation body 13 during rotation is provided at the bottom portion of the rotating body 13, and a cooling water circulating pipe 14 is arranged to the water-cooling mechanism. At the bottom portion of the chamber 5 is provided a cyclone 6 communicating with the chamber 5. Storing tanks 7 for globular fine powder particles are provided at the chamber bottom portion and the cyclone bottom portion respectively, and an exhaust gas tube 6a is connected to the top portion of the cyclone.

In this apparatus, cement raw materials are melted in the dissolving furnace 1, and the melted substance 2 is transferred to the holding furnace 3. The melted substance 2 flown and fallen from the drain hole 3a of the holding furnace 3 collides with the high speed rotating body 13, and is splashed into the chamber 5 by centrifugal force and atomized. The rotating body 13 is cooled by cooling water. The atomized particle immediately becomes globular by surface tension, against which low temperature nitrogen gas not shown in the figure is blown to be cooled. In the same manner as Example 1, the hydraulic cement formed into globular fine powder particles during this cooling process is recovered in the storing tank 7 just below the chamber for those having larger particle diameter or in the storing tank 7 just below the cyclone for those having smaller particle diameter after by being separated from gas in the cyclone 6.

### 〈Example 6〉

As shown in Fig. 7, in this Example, a high speed rotating body 15, which rotates using a horizontal axis as the center, is provided at the upper portion of a chamber 5. The rotation driving mechanism thereof is not shown in the figure. This rotating body 15 has a gear shape. Although it is not shown in the figure, this rotating body 15 is also provided with a cooling mechanism in the same manner as Example 5. At the side portion of the chamber 5 is provided a cyclone 6 communicating with the chamber 5. Storing tanks 7 for globular fine powder particles are provided at the chamber bottom portion and the cyclone bottom portion respectively, and an exhaust gas tube 6a is connected to the top portion of the cyclone.

In this apparatus, cement raw materials are melted in the dissolving furnace 1, and the melted substance 2 is poured onto the high speed rotating body 15. Owing to the high speed rotation of the rotating body 15, the poured melted substance 2 is splashed into the chamber 5 and atomized. Thereafter, in the same manner as Example 5, globular fine powder particles are recovered.

As described above, in the conventional apparatus, cement clinker is produced using the rotary kiln, which is collided with the blade rotating at a high speed and pulverized, thereby the globular hydraulic substance has been obtained.

Whereas, according to the present invention, the raw materials for the hydraulic substance and/or the hydraulic substance are melted in the dissolving furnace, the melted substance is atomized in the chamber, and the globular fine powder particles are obtained by cooling, so that there are provided such excellent effects that:
firstly, it is possible to produce the globular hydraulic substance approximating to the true sphere and having extremely smooth particle surfaces;
secondly, it is possible to produce the globular hydraulic substance exhibiting high fluidity which is suitable for producing molded articles having high strength, high durability and excellent dimensional accuracy;
thirdly, it is possible to produce without limiting the blending ratio of raw material components for the hydraulic substance, and the waste matters such as various incineration ashes and the like are utilized as hydraulic materials to prevent environmental deterioration; and
fourthly, since neither rotary kiln nor finish mill is used, it shows excellent effects such that the maintenance is easy and the like.

### INDUSTRIAL APPLICABILITY

The apparatus of the present invention is useful for producing globular hydraulic substances exhibiting high fluidity such as globular cement.

## Claims

1. An apparatus for producing globular hydraulic substances comprising;
a dissolving furnace (1) for melting raw materials of a hydraulic substance and/or the hydraulic substance,
a means (4, 8, 10, 11, 12, 13, 15) for atomizing the melted substance (2),
a chamber (5) for making the atomized substance into globular fine powder particles by receiving and cooling it, and
a means (6, 7) for recovering said globular fine powder particles.

2. The apparatus for producing globular hydraulic substances according to claim 1 wherein the raw materials for the hydraulic substance are one kind selected from the group consisting of limestone, clay, silica rock, slag, bauxite, iron oxide, and mixtures thereof.

3. The apparatus for producing globular hydraulic substances according to claim 1 wherein the hydraulic substance is one kind selected from the group consisting of cement, cement clinker, slag, lime, and mixtures thereof.

4. The apparatus for producing globular hydraulic substances according to claim 1 further comprising a holding furnace (3) for temporarily storing the substance (2) melted in the dissolving furnace (1) in a melted state.

5. The apparatus for producing globular hydraulic substances according to claim 1 or 4 wherein the means for atomizing is a nozzle (4) spraying the melted substance (2) in the dissolving furnace (1) or the holding furnace (3).

6. The apparatus for producing globular hydraulic substances according to claim 5 wherein the nozzle (4) sprays the melted substance (2) using a high pressure gas.

7. The apparatus for producing globular hydraulic substances according to claim 5 wherein the nozzle (4) sprays the melted substance (2) by reducing the pressure in the chamber (5).

8. The apparatus for producing globular hydraulic substances according to claim 1 or 4 wherein the means for atomizing is a high speed rotating body (13, 15) splashing the melted substance (2) in the dissolving furnace (1) or the holding furnace (3).

9. The apparatus for producing globular hydraulic substances according to claim 1 wherein the chamber (5) has a means for blowing a low temperature gas against the atomized substance to cool.

10. The apparatus for producing globular hydraulic substances according to claim 1 wherein the recovering means (6) has a cyclone (6) or a bag filter.
